# EUROPÄISCHE PATENTSCHRIFT

(11) **EP 2 125 982 B1**
(45) Veröffentlichungstag und Bekanntmachung des Hinweises auf die Patenterteilung: **21.11.2012**
(21) Anmeldenummer: 07820670.3
(22) Anmeldetag: 28.09.2007
(51) Int. Cl.: C09J 5/02

(54) **WÄSSRIGE ZWEI- ODER MEHRKOMPONENTIGE WÄSSRIGE EPOXIDHARZ-PRIMERZUSAMMENSETZUNG**
AQUEOUS TWO-COMPONENT OR MULTICOMPONENT AQUEOUS EPOXY RESIN PRIMER COMPOSITION
COMPOSITION AQUEUSE DE RÉSINE ÉPOXYDE À DEUX CONSTITUANTS OU PLUS POUR COUCHE DE FOND

(30) Priorität: 29.09.2006 EP 06121541
(43) Veröffentlichungstag der Anmeldung: 02.12.2009
(73) Patentinhaber: Sika Technology AG, 6340 Baar (CH)
(72) Erfinder: BRAUN, Andreas, CH-9427 Wolfhalden (CH); HUCK, Wolf-Rüdiger, CH-8044 Zürich (CH)
(74) Vertreter: Sika Patent Attorneys
(86) Internationale Anmeldenummer: PCT/EP2007/060282
(87) Internationale Veröffentlichungsnummer: WO 2008/037780

(56) Entgegenhaltungen:
- EP-A- 1 632 540
- EP-A1- 1 582 571
- WO-A-2006/083656
- US-A- 4 056 208

## Beschreibung

### Technisches Gebiet

Die vorliegende Erfindung betrifft das Gebiet der zwei- oder mehrkomponentigen wässrigen Epoxidharz-Primerzusammensetzungen.

### Stand der Technik

Primer werden schon seit langem verwendet, um die Haftung von kleb- und Dichtstoffen auf diversen Substraten zu verbessern. Epoxidharzzusammensetzungen sind bekannt dafür, dass sie ein relativ gutes Haftspektrum auf verschiedensten Substraten aufweisen. Deshalb sind schon länger Epoxidharzzusammensetzungen als Primer bekannt. Diese Epoxidharz-Primerzusammensetzungen basieren auf Epoxidharzen und sind einkomponentig und enthalten typischerweise Lösungsmittel. Üblicherweise sind diese Primer physikalisch härtend, indem sie durch das Verdampfen des Lösungsmittels einen Polymerfilm bilden.

Diese rein physikalisch härtenden Primer weisen jedoch insbesondere mit Polyurethanklebstoffen einige Nachteile auf.

Zweikomponentige Epoxidharzzusammensetzung mit einer Harzkomponente und einer Aminkomponente werden schon seit langem als Klebstoffe und Beschichtungen eingesetzt. Aufgrund der Problematik der Verwendung von Lösungsmittel, insbesondere was Regulierungen bezüglich VOC (Volatile Organic Compounds) angeht, werden vom Markt wegen Arbeitshygiene- und Gefahrensaspekten zunehmend lösungsmittelfreie Primer gefordert. Derartige Primersysteme sind jedoch schwierig zu formulieren.

Zweikomponentige wässrige Zusammensetzungen bestehen aus einer Epoxidharzkomponente und einer Polyaminkomponente werden bereits als Beschichtungen oder als Bestandteil von Epoxidharz-Zementmörtelmassen, wie beispielsweise in EP-A-0 567 831 offenbart, eingesetzt. Sie werden auch als Primer für das Verkleben oder Beschichten von Beton mit Epoxidharz-Klebstoffen oder -Beschichtungen eingesetzt.

Derartige zweikomponentige wässrige Primerzusammensetzungen wurden aber bisher nicht als Primer für feuchtigkeitshärtende Klebstoffe eingesetzt, da sie vielfach über eine ungenügende Haftung, insbesondere nach Kataplasma-Lagerung verfügen.

### Darstellung der Erfindung

Aufgabe der vorliegenden Erfindung ist es daher, wässrige Epoxidharz-Primerzusammensetzungen zur Verfügung zu stellen, welche zu verbesserten Haftungen von feuchtigkeitshärtenden Polyurethanklebstoffen, führen und insbesondere die Haftung nach einer Kataplasma-Lagerung verbessern.

Überraschenderweise hat sich gezeigt, dass diese Aufgabe durch eine zwei- oder mehrkomponentige wässrige Primerzusammensetzung gemäss Anspruch 1 gelöst werden kann.

Insbesondere hat sich gezeigt, dass durch den Zusatz von Russ und/oder Epoxysilan und/oder Epoxysiloxan und/oder Aminosilan und/oder Aminosiloxan und/oder Mercaptosilan die Haftung stark verbessert wird.

Es hat sich weiterhin gezeigt, dass insbesondere Primerzusammensetzungen mit Epoxid-Festharz zu einer starken Verbesserung führen.

Weitere Aspekte der vorliegenden Erfindung bilden die Verwendung derartiger zwei- oder mehrkomponentigen wässrigen Primerzusammensetzungen als Primer für Polyurethanklebstoffe und/oder Polyurethandichtstoffe sowie ein Verfahren zur Verklebung oder zum Abdichten und die daraus resultierenden Artikel.

Bevorzugte Ausführungsformen sind Gegenstand der Unteransprüche.

### Wege zur Ausführung der Erfindung

Die vorliegende Erfindung betrifft zwei- oder mehrkomponentige wässrige Primerzusammensetzungen, welche aus einer ersten Komponente **K1**, einer zweiten Komponente **K2** und allenfalls mindestens einer weiteren Komponente bestehen.

Die Komponente **K1** enthält mindestens Wasser und ein Epoxidharz **A.**

Die Komponente **K2** enthält mindestens ein Polyamin **B**, welches ein Reaktionsprodukt, insbesondere ein Amidoamin, ein Polyamid oder ein Epoxidharz/Polyamin-Additionsprodukt, ist.

Weiterhin enthält die zwei- oder mehrkomponentige wässrige Primerzusammensetzung Russ und/oder mindestens ein Epoxysilan **ES** und/oder mindestens ein Epoxysiloxan **ESx** und/oder mindestens ein Aminosilan **AS** und/oder mindestens ein Aminosiloxan **ASx** und/oder mindestens ein Mercaptosilan **MS** mit der Massgabe, dass im Falle der Anwesenheit von Epoxysilan **ES** und/oder Epoxysiloxan **ESx** diese oder dieses nicht in derselben Komponente wie das allenfalls vorhandene Aminosilan **AS** und/oder Aminosiloxan **ASx** vorhanden ist.

Das Epoxidharz **A** weist vorzugsweise mehr als eine Epoxidgruppe pro Molekül auf und ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Flüssigharze weisen die Formel (IX) auf

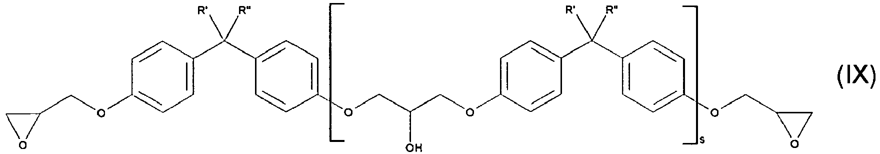

Hierbei stehen die Substituenten R' und R" unabhängig von einander entweder für H oder CH₃. Weiterhin steht der Index s für einen Wert von 0 bis 1. Bevorzugt steht s für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Resolution) erhältlich.

Bevorzugte Epoxid-Festharze weisen die Formel (X) auf

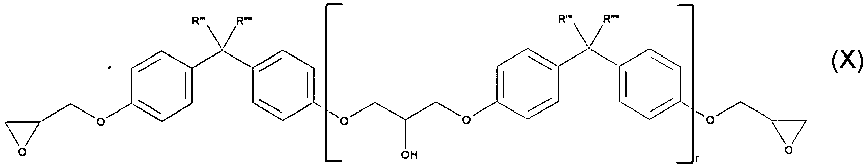

Hierbei stehen die Substituenten R'" und R"" unabhängig von einander entweder für H oder CH₃. Weiterhin steht der Index r für einen Wert von > 1.5, insbesondere von 2 bis 12.

Derartige Epoxid-Festharze sind kommerziell erhältlich als reine Feststoffe oder als wässrige Dispersionen, beispielsweise von Dow oder Huntsman oder Resolution.

Besonders bevorzugt ist das Epoxidharz **A** ein Epoxid-Festharz **A.** Epoxid-Festharze zeigen gegenüber Epoxid-Flüssigharzen den grossen Vorteil, dass eine damit formulierte zwei- oder mehrkomponentige wässrige Primerzusammensetzung bedeutend schneller klebfrei ist, was für den Einsatz als Primer natürlich einen wesentlichen Vorteil darstellt, indem die Wartezeit zwischen dem Auftrag des Primers und eines Kleb- oder Dichtstoffes auf dem Primer stark verkürzt werden kann.

Weitere geeignete Epoxidharze **A** sind einerseits Epoxyharze mit **N-**Glycidyl-Gruppen, wie beispielsweise der folgenden drei Formeln, 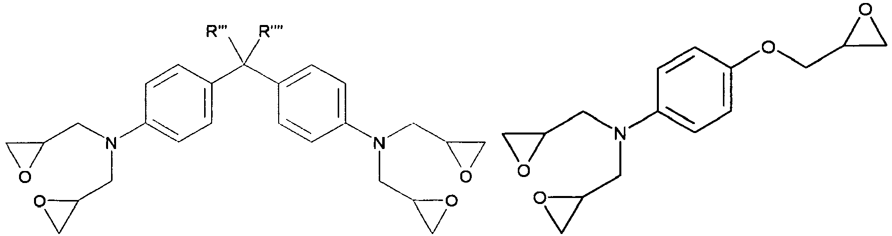 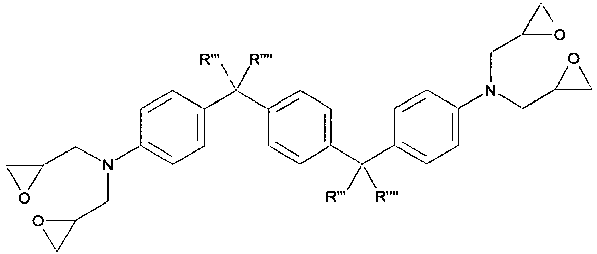 insbesondere, wie sie als Araldite® MY 721, MY 722, MY 720, MY 9512 oder MY 510 wie sie von Huntsman oder Epon HPT 1072 von Shell kommerzialisiert werden.

Andererseits sind weitere geeignete Epoxidharze A solche, welche auf aliphatischen Glycidylethern basieren, wie beispielsweise die Epoxidharze der folgenden zwei Formeln 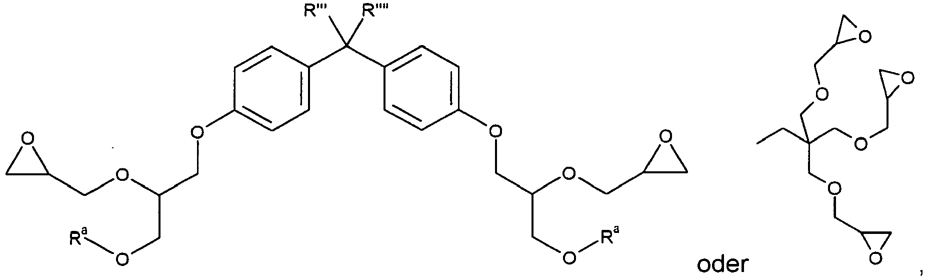 wobei Ra für einen linearen oder verzweigten Alkylrest, insbesondere mit 4 bis 8-C-Atomen, steht.

Andererseits sind weitere geeignete Epoxidharze **A** solche, welche die folgende Formel aufweisen 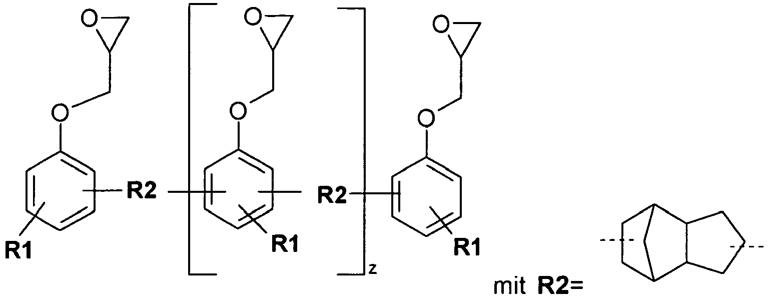 oder CH₂, **R1** = H oder Methyl und z = 0 bis 7.

Insbesondere handelt es sich hierbei um Phenol- oder Kresol-Novolake (**R2** = CH₂).

Solche Epoxidharze sind unter dem Handelnamen EPN oder ECN sowie Tactix®556 von Huntsman kommerziell erhältlich, verschiedene EPN und ECN -Typen werden auch beispielsweise von Huntsman als Dispersion in Wasser angeboten.

Andererseits sind weitere geeignete Epoxidharze **A** Glycidylester, wie sie beispielsweise als Araldite® PT 910 oder PY 184 von Huntsman kommerzialisert werden.

Als meist geeignete Epoxidharze **A** haben sich Bisphenol-A-Diglycidylether-Festharze, insbesondere mit einem Epoxidequivalentgewicht (EEW) zwischen 700 und 750 g/eq, erwiesen.

Der Anteil von Epoxidharze **A** am Gewicht der ersten Komponente **K1** beträgt vorzugsweise 80 bis 30 Gew.-%, insbesondere 65 bis 50 Gew.-%.

Die erste Komponente **K1** enthält weiterhin Wasser. Das Wasser wird in bekannter Art und Weise mit dem Epoxidharz **A** und allenfalls weiteren Bestandteilen der ersten Komponente vermischt. Je nach verwendetem Epoxidharz entsteht eine Emulsion oder Dispersion. Bevorzugt ist eine Dispersion. Es hat sich gezeigt, dass insbesondere derartige Epoxidharz-Dispersionen bevorzugt sind, in welchen das Epoxidharz **A** ein Epoxid-Festharz **A** ist und welches einen Durchmesser im Volumenmittel (Volume Average Diameter) von kleiner als 1 µm, insbesondere zwischen 0.25 µm und 0.75 µm, bevorzugt zwischen 0.4 und 0.6 µm, aufweist.

Es ist dem Fachmann klar, dass auch kommerziell erhältliche Epoxidharz-Emulsionen oder Epoxidharz-Dispersionen als Komponente **K1** oder Teil davon verwendet werden. Insbesondere bevorzugt werden Epoxidharzdispersionen, wie sie von Cognis als Waterpoxy® 1422 oder von Air Products als Ancarez 550™ AR550 Waterborne Epoxy Resin vertrieben werden.

Allenfalls können anschliessend weitere Bestandteile der Komponente **K1** in diese Epoxidharz-Emulsion oder -Dispersion eingemischt werden.

Es kann allenfalls nötig oder von Vorteil sein, dass die erste Komponente **K1**, weitere Bestandteile, wie sie dem Fachmann für die Herstellung von wässrigen Epoxidharz-Emulsionen oder -Dispersionen bereits bekannt sind, wie beispielsweise Lösungsmittel, Emulgatoren, Co-Emulgatoren, Entschäumer, Biocide, Pigmente, Füllstoffe, Reaktivverdünner oder Katalysatoren, aufweist.

Der Anteil von Wasser am Gewicht der ersten Komponente **K1**beträgt vorzugsweise 20 bis 70 Gew.-%, insbesondere 35 bis 50 Gew.-%.

Die Komponente **K1** weist bei 25°C insbesondere eine Viskosität nach Brookfield zwischen 50 mPas und 8000 mPas, vorzugsweise zwischen 90 mPas und 6000 mPas, besonders zwischen 90 mPas und 1000 mPas, auf.

Die zweite Komponente **K2** enthält mindestens ein Polyamin **B**. Ein Polyamin weist stets mehrere, d.h. zwei oder mehr als zwei Aminogruppen auf. Das Polyamin **B** ist ein Reaktionsprodukt, insbesondere ein Amidoamin, ein Polyamid oder ein Epoxidharz/Polyamin-Additionsprodukt.

In einer ersten Ausführungsform ist das Polyamin **B** ein Amidoamin. Beispielsweise sind dies Kondensationsprodukte von Carbonsäuren mit Polyaminen. Eine Möglichkeit hierfür stellt ein Monoamid einer Fettsäure und eines Polyalkylenamins dar.

In einer zweiten Ausführungsform ist das Polyamin **B** ein Polyamid. Derartige Polyamide weisen gleichzeitig mehrere Amidgruppen und mehrere Aminogruppen auf. Eine Möglichkeit hierfür sind Kondensationsprodukte aus Polycarbonsäuren und Polyaminen.

In einer dritten Ausführungsform ist das Polyamin **B** ein Epoxidharz/Polyamin-Additionsprodukt. Derartige Epoxidharz/Polyamin-Additionsprodukte lassen sich beispielsweise aus einer Vielzahl möglicher dem Fachmann bekannter Polyamine und Epoxidharzen, insbesondere Bisphenol-A-Diglycidylether, erhalten. Als hierfür bevorzugte Polyamine sind Ethylendiamin, Polyethylenediamine oder Polyoxyalkylendiamine oder -triamine, insbesondere wie sie unter dem Namen Jeffamine® von Huntsman vertrieben werden. Besonders handelt es sich beim Reaktionsprodukt um dasjenige eines Diglycidylethers von Bisphenol-A und/oder Bisphenol-F mit einem Polyoxyalkylendiamin oder Polyoxyalkylentriamin, insbesondere mit einem Polyoxyalkylendiamin. Ein besonders geeigneter Epoxidharz/Polyamin-Additionsprodukt ist dasjenige, welches in EP-A-0 567 831 als Bis(diamin)-diepoxidaddukt bezeichnet wird.

Der Anteil von Polyamin **B** am Gewicht der zweiten Komponente **K2** beträgt typischerweise 5 bis 90 Gew.-%, vorzugsweise 5 bis 70 Gew.-%, insbesondere 10 bis 60 Gew.-%.

Weiterhin ist es von Vorteil, wenn die zweite Komponente **K2** Wasser enthält, typischerweise in einer Menge von 20 bis 95 Gew.-%, vorzugsweise von 20 bis 70 Gew.-%, insbesondere von 35 bis 50 Gew.-%.

Es ist dem Fachmann klar, dass auch kommerziell erhältliche wässrige Polyamine als Komponente **K2** oder Teil davon verwendet werden können. Insbesondere bevorzugt werden wässrige Polyamine, wie sie beispielsweise von Cognis als Waterpoxy® 751 oder von Air Products unter der Linie mit dem Handelsnamen Anquamine®, insbesondere Anquamine® 419 oder Anquamine® 401, zum Verkauf angeboten werden.

Es kann allenfalls nötig oder von Vorteil sein, dass die erste Komponente **K2**, weitere Bestandteile, wie sie dem Fachmann für die Herstellung von wässrigen Polyamin-Zusammensetzungen bereits bekannt sind, wie beispielsweise Lösungsmittel, Emulgatoren, Co-Emulgatoren, Entschäumer, Biocide, Pigmente, Füllstoffe oder Katalysatoren, aufweist.

Besonders Emulgatoren und Co-Emulgatoren werden vorteilhaft eingesetzt. In einigen Ausführungsformen, insbesondere in denjenigen, in denen als Polyamin **B ein** Epoxidharz/Polyamin-Additionsprodukt, welches in EP-A-0 567 831 als Bis(diamin)-diepoxidaddukt bezeichnet wird, eingesetzt wird, ist es von Vorteil, dass die zweite Komponente **K2** einen Emulgator mit einer Polyoxyalkylendiamin-Struktur und/oder einen Coemulgator mit einer Poly(alkylen)polyaminstruktur enthält.

In einer bevorzugten Ausführungsform enthält die erste Komponente **K1** und/oder zweite Komponente **K2** mindestens einen Emulgator und/oder Tensid.

In einer weiteren bevorzugten Ausführungsform liegt das Epoxidharz **A** als Dispersion in Wasser in der ersten Komponente **K1** und das Polyamin **B** als Emulsion oder Dispersion in Wasser in der zweiten Komponente **K2** vor.

Weiterhin enthält die wässrige Primerzusammensetzung Russ und/oder mindestens ein Epoxysilan **ES** und/oder mindestens ein Epoxysiloxan **ESx** mindestens ein Aminosilan **AS** und/oder mindestens ein Aminosiloxan **ASx** und/oder mindestens ein Mercaptosilan **MS**.

Als Russ, dem Fachmann auch unter dem Fachmann unter dem englischen Begriff Carbon Black bekannt, bevorzugt wird insbesondere industriell hergestellter Russ.

Mit dem Begriff "Silan" werden im vorliegenden Dokument im engeren Sinn Organo-Siliziumverbindungen bezeichnet, in denen zum einen mindestens eine, üblicherweise zwei oder drei hydrolysierbare Gruppen, insbesondere Alkoxy- oder Acyloxygruppen an das Silicium-Atom gebunden sind (über eine Si-O-Bindung), und die zum anderen mindestens einen direkt an das Silizium-Atom (über eine Si-C-Bindung) gebundenen organischen Rest aufweisen. Die Silane, welche hydrolysierbare Gruppen aufweisen, haben die Eigenschaft, bei Kontakt mit Feuchtigkeit zu hydrolysieren. Dabei bilden sich Organosilanole, das heisst Silizium-organische Verbindungen enthaltend eine oder mehrere Silanolgruppen (Si-OH-Gruppen). Da dem Fachmann klar ist, dass üblicherweise in Silanen zu mehr oder weniger grossem Anteil stets auch hydrolisierte bzw. teilhydrolysierte Silane, d.h. Silanole, vorhanden sind, werden deshalb Silanole in diesem Dokument auch als "Silane" im weiteren Sinn betrachtet. Somit bezeichnen "Silane" im weiteren Sinn in diesem Dokument Organo-Siliziumverbindungen, in denen zum einen mindestens eine, üblicherweise zwei oder drei hydrolysierbare Gruppen, insbesondere Alkoxy- oder Acyloxygruppen, oder OH-Gruppen an das Silicium-Atom gebunden sind (über eine Si-O-Bindung), und die zum anderen mindestens einen direkt an das Silizium-Atom (über eine Si-C-Bindung) gebundenen organischen Rest aufweisen.

Durch nachfolgende Kondensationsreaktionen, bilden sich aus den Silanen Siloxane, das heisst Silizium-organische Verbindungen enthaltend eine oder mehrere Siloxangruppen (Si-O-Si-Gruppen), sowie mindestens zwei an Silizium über Si-C-Bindungen direkt gebundene organischen Reste.

Die Epoxygruppe weist ein Oxiran-Strukturelement auf, d.h.

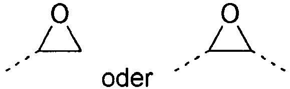

Als "Aminosilane", "Mercaptosilane", beziehungsweise "Epoxysilane", werden Silane bezeichnet, deren organischer Rest mindestens eine Aminogruppe, Mercaptogruppe, beziehungsweise Epoxygruppe, aufweisen. Als "Aminosiloxane", beziehungsweise "Epoxysiloxans", werden Siloxane bezeichnet, deren organischer Rest mindestens eine Aminogruppe, beziehungsweise mindestens eine Epoxygruppe, aufweist.

Als Aminogruppen gelten in diesem Dokument sowohl primäre, sekundäre als auch tertiäre Aminogruppen.

Das Epoxysilan **ES** trägt eine Epoxygruppe. 2-(3,4-Epoxycyclohexyl)-ethyl-trimethoxysilan und 2-(3,4-Epoxycyclohexyl)-ethyl-triethoxysilan sind Bespiele für Epoxysilane.

Weitere Beispiele für Epoxysilane **ES** sind solche Silane, welche eine Glycidyloxygruppe tragen.

Vorzugsweise weist das Epoxysilan **ES** die Formel (I) auf.

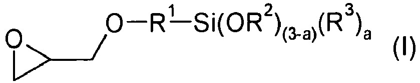

Hierbei steht R¹ für eine lineare oder verzweigte Alkylengruppe mit 1 bis 6 C-Atomen, insbesondere für Propylen.

Weiterhin steht R² für H oder eine Alkylgruppe mit 1 bis 4 C-Atomen oder für eine Acylgruppe und R³ für H oder für eine Alkylgruppe mit 1 bis 10 C-Atomen. Schliesslich steht a für einen Wert von 0, 1 oder 2.

Falls R² eine Acylgruppe ist, wird die Acetylgruppe bevorzugt. Bevorzugt ist R² Methyl oder Ethyl, meist bevorzugt Methyl.

Bevorzugt ist a = 0.

Wenn a = 1 oder 2 ist, wird für R³ Methyl bevorzugt.

Als meist bevorzugte Epoxysilane **ES** gelten 3-Glycidyloxypropyl-triethoxysilan und 3-Glycidyloxypropyl-trimethoxysilan, insbesondere 3-Glycidyloxypropyl-trimethoxysilan.

Das Aminosilan **AS** weist vorzugsweise mindestens eine primäre und/oder sekundäre Aminogruppe auf. Vorzugsweise weist das Aminosilan mindestens eine primäre Aminogruppe auf. Insbesondere bevorzugt ist das Aminosilan **AS** ein Aminosilan der Formel (II), (III), oder (IV):

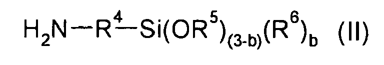

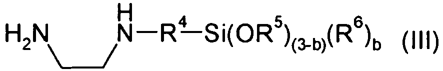

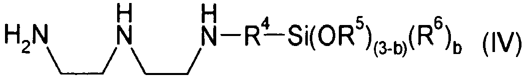

Hierbei steht R⁴ für eine lineare oder verzweigte Alkylengruppe mit 1 bis 6 C-Atomen, insbesondere für Propylen.

Weiterhin steht R⁵ für H oder eine Alkylgruppe mit 1 bis 4 C-Atomen oder für eine Acylgruppe und R⁶ für H oder für eine Alkylgruppe mit 1 bis 10 C-Atomen. Schliesslich steht b für einen Wert von 0, 1 oder 2.

Falls R⁵ eine Acylgruppe ist, wird die Acetylgruppe bevorzugt. Bevorzugt ist R⁵ Methyl oder Ethyl, meist bevorzugt Methyl.

Bevorzugt ist b = 0.

Wenn b = 1 oder 2 ist, wird für R⁶ Methyl bevorzugt.

Beispiele für derartige Aminosilane **AS** sind 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, N-(2-Aminoethyl)-3-aminopropyl-trimethoxysilan, 3-[2-(2-Aminoethylamino)-ethyl-amino]-propyl-trimethoxysilan, sowie deren Analoga mit Ethoxy- oder Isopropoxygruppen anstelle der Methoxygruppen am Silicium.

Bevorzugt als Aminosilane **AS** sind 3-Aminopropyl-trimethoxysilan, N-(2-Aminoethyl)-3-aminopropyl-trimethoxysilan und 3-[2-(2-Aminoethylamino)-ethylamino]-propyl-trimethoxysilan.

Meist bevorzugt als Aminosilane **AS** ist N-(2-Aminoethyl)-3-aminopropyl-trimethoxysilan.

In einer Ausführungsform ist das Aminosilan das Reaktionsprodukt eines der Aminosilane der Formel (II), (III) oder (IV) und mit mindestens eines Epoxysilans **ES**, insbesondere eines Epoxysilans der Formel (I). Derartige Reaktionsprodukte weisen Aminoalkohol-Struktur der Formel (V) auf.

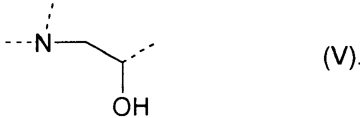

Wenn das Aminosilan ein primäres Aminosilan ist entsteht zuweilen auch das Strukturelement der Formel (VI).

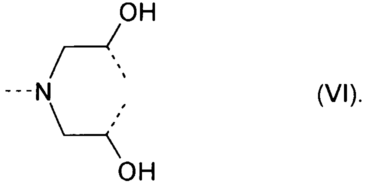

Diese Strukturelemente der Formeln (V) und (VI) können auch gleichzeitig vorhanden sein.

Beispiel eines derartigen Aminosilanes **AS** der Formel (VII), welches ein mögliches Reaktionsproduktes des Aminosilans der Formel (II) und eines Epoxysilans der Formel (I) ist.

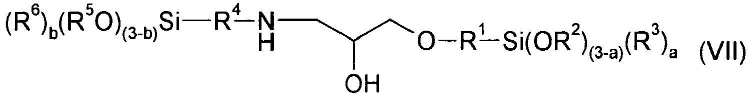

Das Mercaptosilan **MS** weist mindestens eine Mercaptogruppe auf. Bevorzugt weisen die Mercaptosilane 3-Mercaptopropyl als organischen Rest des Silans auf. Als besonders bevorzugte Mercaptosilane **MS** gelten 3-Mercaptopropyl-trimethoxysilan und 3-Mercaptopropyl-triethoxysilan. Meist bevorzugt als Mercaptosilan **MS** ist 3-Mercaptopropyl-trimethoxysilan.

Als Aminosiloxane **ASx** können insbesondere aus der Kondensation eines Aminosilans **AS** mit einem weiteren Silan unter Bildung mindestens einer Siloxan-Bindung hergestellt werden. Das weitere Silan kann auch ein Aminosilan **AS** sein. Insbesondere sind die Aminosiloxane **ASx** aminogruppentragende Silsesquioxane. Insbesondere weisen derartige Silsesquioxane Aminogruppen tragende Organoreste der Formeln Formel (IXa), (IXb) oder (IXc) auf.

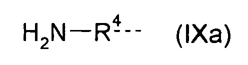

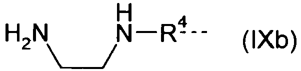

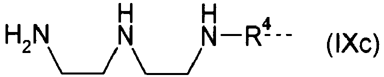

Insbesondere bevorzugte Aminosiloxane, insbesondere aminogruppentragende Silsesquioxane, sind diejenigen, welche neben der oder den n Aminogruppen weiterhin Phenyl- oder Alkylgruppen mit 1 bis 10 C-Atomen aufweisen, bevorzugt Methyl, aufweisen, welche direkt über eine Si-C-Bindung an Silizium gebunden sind.

Beispiele für geeignete Aminosiloxane **ASx** sind auch solche, wie sie unter dem Handelsnamen Dynasylan®. HYDROSIL, insbesondere HYDROSIL 1151, HYDROSIL 2775, HYDROSIL 2776, HYDROSIL 2909 oder HYDROSIL 2929, von Degussa kommerzialisiert werden.

Als Epoxysiloxane **ESx** können insbesondere aus der Kondensation eines Epoxysilane **ES** mit einem weiteren Silan unter Bildung mindestens einer Siloxan-Bindung hergestellt werden. Das weitere Silan kann auch ein Epoxysilan **ES** sein.

Insbesondere sind die Epoxysiloxane **ESx** epoxygruppentragende Silsesquioxane. Insbesondere weisen derartige Silsesquioxane Epoxygruppentragende Organoreste der Formel (IXa')

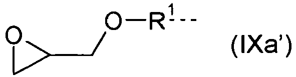

Insbesondere bevorzugte Epoxysiloxane, insbesondere Epoxygruppentragende Silsesquioxane, sind diejenigen, welche neben der oder den Epoxygruppen weiterhin Phenyl- oder Alkylgruppen mit 1 bis 10 C-Atomen aufweisen, bevorzugt Methyl, aufweisen, welche direkt über eine Si-C-Bindung an Silizium gebunden sind.

Ein Beispiel für ein geeignetes Epoxysiloxan **ESx** ist Dynasylan® HYDROSIL 2926, wie es von Degussa kommerzialisiert werden.

Russ kann Teil der Komponente **K1** oder **K2** oder als weitere Komponente oder Teil einer weiteren Komponente sein. Es ist bevorzugt, dass Russ nicht Teil der ersten Komponente **K1** ist. Es hat sich nämlich gezeigt, dass die Stabilität der Epoxidharzdispersion oder -Emulsion negativ beeinflusst wird, wenn Russ Teil der ersten Komponente **K1** ist. Bevorzugt ist Russ Teil der zweiten Komponente **K2.**

Das Epoxysilan **ES** und/oder Epoxysiloxan **ESx** ist/sind vorteilhaft Teil der ersten Komponente **K1** oder einer weiteren Komponente. Es muss jedoch darauf geachtet, werden, dass in dieser weiteren Komponente kein Aminosilan **AS** und/oder Aminosiloxan **ASx** und/oder Mercaptosilan **MS** vorhanden ist, da sonst eine Reaktion erfolgen würde.

Das Aminosilan **AS** kann Teil der Komponente **K1** oder **K2** oder als weitere Komponente oder Teil einer weiteren Komponente sein. Aus Stabilitätsgründen ist es vorteilhaft, wenn das Aminosilan nicht Teil der ersten Komponente **K1** ist. Bevorzugt ist das Aminosilan **AS** Teil der zweiten Komponente **K2.**

Aminosiloxan **ASx** kann Teil der Komponente **K1** oder **K2** oder als weitere Komponente oder Teil einer weiteren Komponente sein. Aus Stabilitätsgründen ist es vorteilhaft, wenn das Aminosiloxan nicht Teil der ersten Komponente **K1** ist. Bevorzugt ist das Aminosiloxan **ASx** Teil der zweiten Komponente **K2.**

Mercaptosilan **MS** kann Teil der Komponente **K1** oder **K2** oder als weitere Komponente oder Teil einer weiteren Komponente sein. Bevorzugt ist das Mercaptosilan **MS** Teil der zweiten Komponente **K2.**

Es kann von Vorteil sein, wenn eine Mischung von Aminosilan **AS** und/oder Aminosiloxan **ASx** und/oder Mercaptosilan **MS** als weitere Komponente oder als Teil einer weiteren Komponente eingesetzt wird.

Es kann allenfalls nötig oder von Vorteil sein, dass die weiteren Komponenten weitere Bestandteile, wie beispielsweise Wasser, Lösungsmittel, Emulgatoren, Co-Emulgatoren, Entschäumer, Biocide, Pigmente, Füllstoffe oder Katalysatoren, aufweisen.

In einer Ausführungsform weist die zwei- oder mehrkomponentige wässrige Primerzusammensetzung drei Komponenten auf und dass es die dritte Komponenten **K3** ist, welche Russ und/oder und/oder Epoxysilan **ES** und/oder Epoxysiloxan **ESx** und/oder Aminosilan **AS** und/oder Aminosiloxan **ASx** und/oder Mercaptosilan **MS** enthält

In einer anderen Ausführungsform weist die zwei- oder mehrkomponentige wässrige Primerzusammensetzung zwei Komponenten auf, in welcher das Aminosilan **AS** und/oder Aminosiloxan **ASx** und/oder Mercaptosilan **MS** Teil der zweiten Komponente **K2** sind. Ein allenfalls vorhandenes Epoxysilan **ES** und/oder Epoxysiloxan **ESx** sind/ist dann Teil der ersten Komponente **K1.**

Der Anteil des Russes am Gewicht der zwei- oder mehrkomponentigen wässrige Primerzusammensetzung beträgt vorteilhaft 0 bis 20 bevorzugt 0 bis 10 Gew.-%, insbesondere 3 bis 10 Gew.-%.

Der Anteil des Epoxysilan **ES** am Gewicht der zwei- oder mehrkomponentige wässrige Primerzusammensetzung beträgt vorteilhaft 0 bis 5 Gew.-%, bevorzugt 0 bis 2 Gew.-%, insbesondere 0.5 bis 2 Gew.-%.

Der Anteil des Epoxysiloxans **ESx** am Gewicht der zwei- oder mehrkomponentige wässrige Primerzusammensetzung beträgt vorteilhaft 0 bis 5 Gew.-%, bevorzugt 0 bis 2 Gew.-%, insbesondere 0.05 bis 2 Gew.-%.

Der Anteil des Aminosilan **AS** am Gewicht der zwei- oder mehrkomponentige wässrige Primerzusammensetzung beträgt vorteilhaft 0 bis 5 Gew.-%, bevorzugt 0 bis 2 Gew.-%, insbesondere 0.5 bis 2 Gew.-%.

Der Anteil des Aminosiloxans **ASx** am Gewicht der zwei- oder mehrkomponentige wässrige Primerzusammensetzung beträgt vorteilhaft 0 bis 5 Gew.-%, bevorzugt 0 bis 2 Gew.-%, insbesondere 0.05 bis 2 Gew.-%.

Der Anteil des Mercaptosilans **MS** am Gewicht der zwei- oder mehrkomponentige wässrige Primerzusammensetzung beträgt vorteilhaft 0 bis 5 Gew.-%, bevorzugt 0 bis 2 Gew.-%, insbesondere 0.5 bis 2 Gew.-%.

Vorteilhaft ist der Anteil der Gewichtsumme von Epoxysilan **ES** und Epoxysiloxane **ESx** und Aminosilan **AS** und Aminosiloxan **ASx** und Mercaptosilan **MS** am Gewicht der zwei- oder mehrkomponentige wässrige Primerzusammensetzung 0 bis 10 Gew.-%, bevorzugt 0 bis 5 Gew.-%, insbesondere 0.5 bis 3 Gew.-%.

Es ist vorteilhaft, wenn die zwei- oder mehrkomponentige wässrige Primerzusammensetzung - abgesehen von den allenfalls vorhandenen Epoxysilan **ES** und/oder Epoxysiloxan **ESx** und/oder Aminosilan **AS** und/oder Aminosiloxan **ASx** und/oder Mercaptosilan **MS**, sowie die bei der Hydrolyse entstehenden Alkohole - keine organischen Verbindungen enthalten, welche als VOC (=Volatile Organic Compounds)
entweder gemäss nach EU-Richtline 2004/42/EG definiert sind, indem sie einen Siedepunkt von höchstens 250°C bei einem Standarddruck von 101,3 kPa aufweisen;
oder gemäss der Schweizer Verordnung über die Lenkungsabgabe auf flüchtige organische Verbindungen definiert sind, indem sie einen Dampfdruck von mindestens 0.1 mbar bei 20 °C oder einen Siedepunkt von höchstens 240°C bei 1013.25 mbar aufweisen.

Die einzelnen Komponenten werden nach der Herstellung vorteilhaft in dichte Verpackungen verpackt. Die zwei oder mehrere Komponenten sind getrennt voneinander lagerstabil. Bei der Lagerung sollte darauf geachtet werden, dass die Temperatur möglichst nicht unter 5 °C, insbesondere nicht unter 0°C fällt. Bei diesen Temperaturen ist die Stabilität der Emulsion und oder der Dispersion vielfach nicht mehr gewährleistet. Ebenso sollte die Temperatur nicht über 60°C steigen.

Die zwei- oder mehrkomponentige wässrigen Primerzusammensetzung kann als Primer, insbesondere für Polyurethanklebstoffe und/oder Polyurethandichtstoffe, verwendet werden. Die beschriebene wässrige Haftvermittlerzusammensetzung eignet sich insbesondere als Primer, vorzugsweise als Primer für Kleb- und Dichtstoffe. Durch die Verwendung eines derartigen Primers wird die Haftung verbessert.

Ein derartiges Verfahren zur Verklebung oder zum Abdichten umfasst die folgenden Schritte:
i) Mischen der zwei oder mehr Komponenten einer zwei- oder mehrkomponentigen wässrigen Primerzusammensetzung, wie sie vorgängig beschrieben wurde;
ii) Applikation der gemischten Primerzusammensetzung auf ein zu verklebendes oder abzudichtendes Substrat **S1**;
iii) Ablüften der Primerzusammensetzung;
iv) Applikation eines Klebstoffes oder Dichtstoffes auf die abgelüftete Zusammensetzung, welche sich auf dem Substrat **S1** befindet;
v) Kontaktieren des Klebstoffs oder Dichtstoffes mit einem zweiten Substrat **S2**;
oder
i') Mischen der zwei oder mehr Komponenten einer zwei- oder mehrkomponentigen wässrigen Primerzusammensetzung, wie sie vorgängig beschrieben wurde;;
ii') Applikation der gemischten Primerzusammensetzung auf ein zu verklebendes oder abzudichtendes Substrat **S1**;
iii') Applikation eines Klebstoffes oder Dichtstoffes auf die Oberfläche eines zweiten Substrates **S2**;
iv') Kontaktieren des Klebstoffes oder Dichtstoffes mit der abgelüfteten Zusammensetzung, welche sich auf dem Substrat **S1** befindet;
oder
i") Mischen der zwei oder mehr Komponenten einer zwei- oder mehrkomponentigen wässrigen Primerzusammensetzung, wie sie vorgängig beschrieben wurde;
ii") Applikation der gemischten Primerzusammensetzung auf ein zu verklebendes oder abzudichtendes Substrat **S1**;
iii")Ablüften der Primerzusammensetzung;
iv")Applikation eines Klebstoffes oder Dichtstoffes zwischen die Oberflächen des Substrates **S1** und **S2**;
wobei das zweite Substrat **S2** aus demselben oder unterschiedlichem Material wie das Substrat **S1** besteht.

Das Mischen der zwei oder mehr Komponenten kann auf vielfältige Art und Weise erfolgen.

Das Ablüften kann allenfalls bei erhöhter Temperatur und/oder unter Umständen von Anblasen mit einem Gas erfolgen, was zu einer Verkürzung der Ablüftezeit führen kann.

Üblicherweise schliesst sich an den Schritt v), iv') oder iv") ein Schritt vi) des Aushärtens des Kleb- oder Dichtstoffes an.

Die Applikation der gemischten zwei- oder mehrkomponentigen wässrigen Primerzusammensetzung kann mittels Tuch, Filz, Rolle, Sprühen, Schwamm, Pinsel, Tauchbeschichten oder dergleichen erfolgen und kann sowohl manuell als auch mittels Roboter erfolgen.

Klebstoffe und Dichtstoffe sind sehr ähnlich. Beide brauchen eine gute Haftung auf dem Untergrund, um ihre Funktion optimal zu erfüllen. Bei den Klebstoffen sind die Anforderungen an die Haftung, beziehungsweise an die Kräfte, die zwischen Substrat und Klebstoff übertragen werden müssen jedoch gegenüber den Dichtstoffen noch höher. Deshalb sind insbesondere Klebstoffe bevorzugt.

Als Klebstoff kann grundsätzlich jeder Klebstoff verwendet werden. Der meist bevorzugte Klebstoff ist ein feuchtigkeitshärtender Klebstoff, wobei das Aushärten des Klebstoffes durch Aushärten mittels Feuchtigkeit, insbesondere Luftfeuchtigkeit, erfolgt. Einerseits sind dies Klebstoffe basierend auf Silangruppenterminierten Polymeren, wie sie dem Fachmann unter der Bezeichnung "MS-Polymere" bekannt sind oder auf Silangruppenterminierten Polyurethanen, wie sie dem Fachmann unter der Bezeichnung "SPUR" (**S**ilane Terminated **P**oly**u**rethanes) bekannt sind. Die vorteilhaften Haftverbesserungen haben sich jedoch insbesondere Polyurethanklebstoffen oder -dichtstoffen gezeigt, insbesondere Polyurethanklebstoffe, welche isocyanatgruppen aufweisende Polyurethanprepolymere enthalten. Derartige Polyurethanklebstoffe sind kommerziell breit erhältlich insbesondere unter dem Namen Sikaflex® von Sika Schweiz AG.

Der Klebstoff weist typischerweise eine Dicke von mehr als 1 mm, bevorzugt zwischen 2 und 8 mm, auf.

Das Substrat **S1** und/oder **S2** können vielfältiger Art sein. Bevorzugt ist mindestens eines der Substrates **S1** oder **S2** ein mineralisches oder ein metallisches Substrat. Als metallische Substrate sind insbesondere Metalle und Legierungen, insbesondere Stähle, Aluminium und Buntmetalle sowie deren Legierungen geeignet.

Als mineralisches Substrat sind neben Beton, Mörtel und Backstein Insbesondere Glas oder Glaskeramik geeignet.

Weitere sehr geeignete Substrate sind poröse Substrate, wie beispielsweise Holz oder Polystyrol, insbesondere in Form von Dämmplatten.

Die Substrate können bei Bedarf vor dem Applizieren der zwei oder mehrkomponentigen wässrigen Primerzusammensetzung, beziehungsweise des Dicht- oder Klebstoffes, vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln.

So kann es insbesondere bei lackierten Untergründen, insbesondere Automobildecklacken, von Vorteil sein, auf die applizierte mehrkomponentige wässrigen Primerzusammensetzung einen zusätzlichen Primer, welcher für die Haftung auf Lack optimiert ist, zu verwenden.

Die zwei oder mehrkomponentige wässrige Primerzusammensetzung eignet sich insbesondere für das Verglasen von Fahrzeugen. Hierbei wird insbesondere die Glasscheibe, zumindest im Randbereich, wo typischerweise eine Glaskeramik angebracht ist, mit einer zwei oder mehrkomponentigen wässrigen Primerzusammensetzung vorbehandelt, während der Lackflansch typischerweise mit einem Lackprimer vorbehandelt wird. Die derartig vorbehandelte Scheibe wird mittel einkomponentigen Polyurethanklebstoff mit dem allenfalls vorbehandelten lackierten Scheibenflansch eingeklebt, so dass eine kraftschlüssige dichte Verklebung entsteht.

Aus dem beschriebenen Verfahren zum Verkleben oder zum Abdichten entsteht ein Artikel.

Derartige Artikel sind von unterschiedlichster Art. Insbesondere handelt es sich hierbei um Artikel der industriellen Fertigung oder des Tief- oder Hochbaus. Ein derartiger Artikel kann ein Bauwerk sein, insbesondere ein Bauwerk des Hoch- oder Tiefbaus, oder er kann ein Transportmittel sein, beispielsweise ein Fahrzeug zu Wasser oder zu Lande oder zu Luft, insbesondere ein Automobil, ein Bus, ein Lastkraftwagen, ein Zug oder ein Schiff, oder ein Anbauteil davon. Besonders geeignet sind elastische Verklebungen im Fahrzeugbau, wie beispielsweise das Ankleben von Teilen, wie Kunststoffabdeckungen, Zierleisten, Flansche, Stosstangen, Führerkabinen oder andere Anbauteile, an die lackierte Karosserie eines Transportmittels, oder das Einkleben von Scheiben in die Karosserie. Als Fahrzeuge genannt werden sollen beispielsweise Automobile, Lastkraftwagen, Busse, Schienenfahrzeuge und Schiffe.

Besonders bevorzugt ist der Artikel ein Transportmittel, insbesondere ein Automobil, Bus, Lastkraftwagen, Schienenfahrzeug, ein Schiff oder ein Luftfahrzeug.

Mit den erfindungsgemässen Zusammensetzungen kann nach dem Mischen der zwei Komponenten einige Stunden zugewartet werden, bis sie appliziert werden, ohne dass die Haftung der darauf applizierten Klebstoffe negativ beeinflusst würde. Die erfindungsgemässen Zusammensetzungen weisen deshalb typischerweise Topfzeiten von mehreren Stunden, insbesondere mehr als 10 Stunden, auf. Lange Topfzeiten sind sehr vorteilhaft für die Applikationen.

Es hat sich gezeigt, dass mit den erfindungsgemässen Zusammensetzungen insbesondere die Haftung nach Kataplasma-Lagerung stark verbessert werden kann.

Weiterhin wurde gefunden, dass mit den erfindungsgemässen Zusammensetzungen nach dem Applizieren der Zusammensetzung auf diverse Substrate sehr lange zugewartet werden, bis der Klebstoff darauf appliziert wird, ohne dass die Haftung der darauf applizierten Klebstoffe negativ beeinflusst würde. Die erfindungsgemässen Zusammensetzungen weisen deshalb typischerweise Offenzeiten von mehreren Monaten, insbesondere mehr als 120 Tagen auf. Lange Offenzeiten sind sehr vorteilhaft für die Applikationen.

Es hat sich gezeigt, dass mit den erfindungsgemässen Zusammensetzungen insbesondere die Haftung nach Kataplasma-Lagerung stark verbessert werden kann.

Weiterhin hat sich gezeigt, dass, wenn die zwei- oder mehrkomponentige wässrige Primerzusammensetzung Russ enthält, die Topfzeit stark verlängert werden kann, ohne dass die Ablüftezeit oder die Verarbeitungszeiten verlängert werden und insbesondere, dass die Haftung nicht verschlechtert wird.

### Beispiele

### Epoxidharz-enthaltende Komponente K1

Es wurden Ancarez^{™} AR550 Waterborne Epoxy Resin ("*AR550*") von Air Products sowie Waterpoxy® 1422 ("*1422*") von Cognis eingesetzt.

Ancarez^{™} AR 550 ist eine Epoxid-Festharz-Dispersion eines Bisphenol-A-Diglycidylether Festharzes (Epoxidequivalentgewicht (EEW) = 700 - 750 g/eq). Diese Epoxid-Festharz-Dispersion ist milchig weiss und weist einen Festkörpergehalt von 55 Gew.-%, ein Epoxidequivalentgewicht (EEW) von 1300 g/eq, eine Viskosität (25°C)(Brookfield) von 100 mPas sowie einen Durchmesser im Volumenmittel (D_{v'}) von 0.5 µm auf.

Waterpoxy® 1422 ist eine Epoxid-Festharz-Dispersion eines Bisphenol-A-Diglycidylether Festharzes (Epoxidequivalentgewicht (EEW) = 500 - 700 g/eq. Diese Epoxid-Festharz-Dispersion ist milchig weiss und weist einen Festkörpergehalt von 54 Gew.-%, ein Epoxidequivalentgewicht (EEW) von 1200 g/eq, eine Viskosität (25°C)(ASTM D 1824-65) von 2000 - 6000 mPas auf.

Zu diesen Epoxidharz-Dispersionen wurden gemäss Tabelle 1 gegebenenfalls weitere Komponenten hinzugefügt.

### Polyamin enthaltende Komponente K2

### wässriges Polyamin (WB)

Anquamine® 419, Air Products, Polyamin-Epoxidharzaddukt (Aktiv-H-Equivalentgewicht (AHEW) 284 g/eq, Wassergehalt 15% ("*419*")
Waterpoxy® 751, Cognis, Polyamin-Epoxidharzaddukt, Gehalt 58.5 - 61.5 Gew.-%, Aminzahl 174 - 192 mg KOH/g. ("*751*")

Zu diesen wässrigen Polyaminen wurden gemäss Tabelle 1 gegebenenfalls weitere Komponenten hinzugefügt.

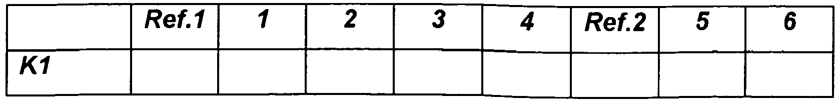

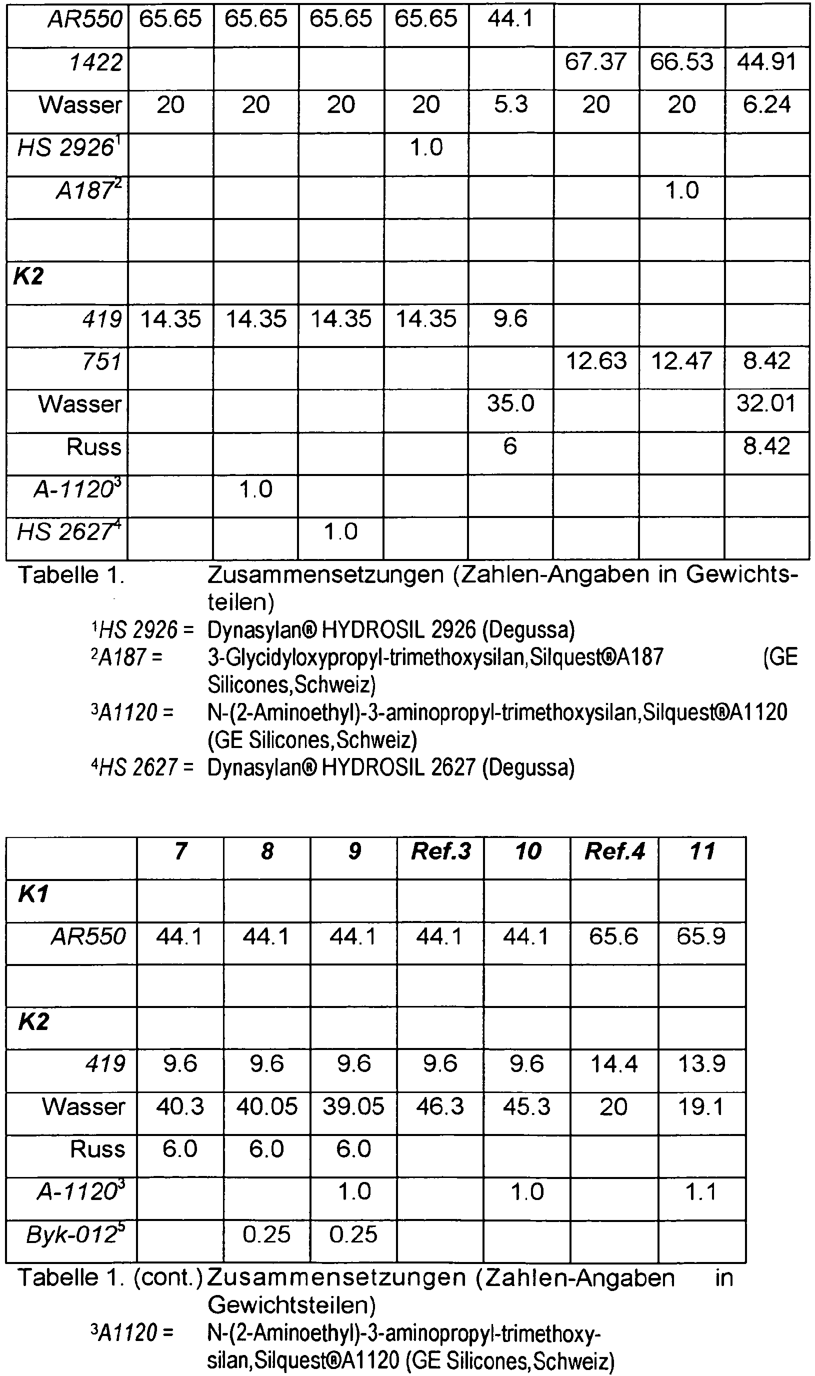

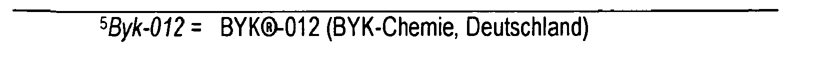

Die zwei Komponenten wurden zusammengemischt und mittels eines mit der Zusammensetzung getränkten Filzes auf das jeweilige Substrat aufgetragen, während 60 Minuten abgelüftet und eine Dreiecksraupe von SikaTack® Ultrafast ("STUF") Sikaflex®-250 DM-2 ("DM-2"), beziehungsweise Sikaflex®-250 HMV-2 ("HMV-2"), bei 60°C und 50% rel. Luftfeuchtigkeit mittels Auspresskartusche und Düse aufgetragen. Alle sind einkomponentige feuchtigkeitshärtende Polyurethanklebstoffe, welche Polyurethanprepolymere mit Isocyanatgruppen enthalten und sind kommerziell erhältlich bei Sika Schweiz AG.

### Substrate:

- Floatglass, Rocholl, Deutschland ("Glas")
- ESG Keramik, Ferro 14251, Rocholl, Deutschland ("ESG")
- Aluminium eloxiert E6EV1, Rocholl, Deutschland ("Al-elox")
- Orginalscheiben mit Keramikrand, Haftung wurde auf Keramik getestet:
   Scheibe 1: Mazda 323, Safevue ("Scheibe 1 ")
   Scheibe 2: VW, Transport T4, Safevue ("Scheibe 2")
   Scheibe 3: Toyota Corolla, Pilkington ("Scheibe 3")

Das eloxierte Aluminium wurde unmittelbar vor Gebrauch mittels Scotch-Brite (3M) angeschliffen.

Alle Substrate wurden vor dem Auftragen der Zusammensetzungen mit einem mit Isopropanol getränkten Zellulosetuch abgewischt und während 10 Minuten abgelüftet.

Der Klebstoff wurde nach einer Aushärtezeit von 7 Tagen Klimaraumlagerung (,KL') (23°C, 50% rel. Luftfeuchtigkeit), sowie nach einer anschliessenden Wasserlagerung (,WL') in Wasser bei 23°C während 7 Tagen, sowie nach einer anschliessend Kataplasma-Lagerung (,CP') von 7 Tagen bei 70°C, 100 % rel. Luftfeuchtigkeit, getestet.

Die Haftung des Klebstoffes wurde mittels 'Raupentest' getestet. Hierbei wird die Raupe am Ende knapp über der Klebefläche eingeschnitten. Das eingeschnittene Ende der Raupe wird mit einer Rundzange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebstoff (Kohäsionsbruch). Die Bewertung der Hafteigenschaften erfolgt durch visuelle Bestimmung des kohäsiven Anteils der Haftfläche:
"P" in der Wertung bezeichnet eine Ablösung des Primers vom Untergrund.
"PB" in der Wertung bezeichnet einen köhäsiven Bruch im Primer.

Je höher der Anteil an kohäsivem Bruch ist, umso besser wird die Verklebung eingeschätzt. Testresultate mit Kohäsionsbrüchen von weniger als 50 %, insbesondere weniger als 40 %, gelten typischerweise als ungenügend.

Die Haftresultate sind in den Tabellen 2, 3, 4, 5, 6 und 7 angegeben.

**Tabelle 2. Haftung mit Sikaflex®-250 HMV-2 auf Originalscheiben.**

| | Scheibe 1 | | | Scheibe 2 | | | Scheibe 3 | | |
|---|---|---|---|---|---|---|---|---|---|
| HMV-2 | RT | WL | CP | RT | WL | CP | RT | WL | CP |
| ***Ref.1*** | 70 | 90 | 0P | 80P | 80P | 0P | 20 | 70 | 0P |
| ***1*** | 90P | 100 | 80 | 95 | 100 | 40 | 100 | 100 | 100 |
| ***2*** | 98 | 100 | 40P | 95P | 100 | 80 | 100 | 100 | 100 |
| ***3*** | 80P | 100 | 0P | 70 | 95 | 10P | 95 | 95 | 0P |
| ***4*** | 95 | 100 | 5P | 90P | 60P | 10P | 100 | 100 | 10P |

**Tabelle 3. Haftung mit SikaTack® Ultrafast oder Sikaflex®-250 DM-2 auf unterschiedlichen Substraten.**

| | Glas | | | ESG | | | Al-elox | | |
|---|---|---|---|---|---|---|---|---|---|
| STUF | RT | WL | CP | RT | WL | CP | RT | WL | CP |
| ***Ref.2*** | 70P | 0P | 0P | 100 | 5P | 0P | 90P | 40P | 50P |
| ***5*** | 100 | 95P | 10P | 100 | 100 | 20P | 95P | 100 | 40P |
| ***6*** | 100 | 0P | 75P | 100 | 75 | 95P | 100 | 30P | 75P |
| DM-2 | | | | | | | | | |
| ***Ref.2*** | 100 | 0P | 0P | 100 | 5P | 0P | 100 | 50 | 0P |
| ***5*** | 100 | 100 | 5P | 100 | 100 | 20P | 100 | 95 | 40P |
| ***6*** | 100 | 0P | 10P | 100 | 100 | 0P | 100 | 100 | 20P |

**Tabelle 4. Haftung mit Sikaflex®-250 DM-2 und Sikaflex®-250 HMV-2 auf unterschiedlichen Substraten.**

| | ***Glas*** | | | ESG | | | Al-elox | | |
|---|---|---|---|---|---|---|---|---|---|
| DM-2 | RT | WL | CP | RT | WL | CP | RT | WL | CP |
| ***Ref.3*** | 90PB | 95PB | 5P | 80PB | 85PB | 100 | 95PB | 95PB | 20P |
| ***7*** | 95B | 100 | 100 | 80PB | 95PB | 100 | 100 | 95PB | 100 |
| ***8*** | 90PB | 100 | 100 | 80PB | 95PB | 100 | 95PB | 95PB | 100 |
| ***9*** | 95PB | 90PB | 100 | 80PB | 90PB | 100 | 90PB | 95PB | 100 |
| ***10*** | 95PB | 90PB | 100 | 90PB | 85PB | 100 | 95PB | 80PB | 75PB |

| HMV-2 | | | | | | | | | |
|---|---|---|---|---|---|---|---|---|---|
| ***Ref.3*** | 95 | 100 | 5P | 95PB | 95PB | 60P | 85PB | 100 | 0P |
| ***7*** | 100 | 100 | 100 | 100 | 100 | 100 | 100 | 100 | 98P |
| ***8*** | 95PB | 100 | 100 | 95PB | 100 | 100 | 95PB | 100 | 100 |
| ***9*** | 95PB | 95P | 100 | 80PB | 100 | 100 | 100 | 100 | 100 |
| ***10*** | 100 | 95PB | 90P | 100 | 95PB | 100 | 90PB | 95PB | 60P |

Die Ergebnisse der Tabellen 2, 3, und 4 zeigen, dass die erfindungsgemässen Zusammensetzungen insbesondere die Haftung der Klebstoffe nach einer Kataplasma-Lagerung stark verbessern.

In Tabelle 5 und 6 wurde nach der Mischung der zwei Komponenten unterschiedliche Zeit gewartet, bis die Zusammensetzung auf Glas appliziert wurde. Die vom Fachmann als Topfzeit bezeichnete Zeit, ist diejenige bei welcher keine Haftung mehr auftritt. Die für Tabelle 5 benutzen Zusammensetzungen weisen dementsprechend eine Topfzeit von mehr als 10 Stunden auf.

**Tabelle 5. Haftung nach unterschiedlichen Wartezeiten zwischen Mischung und Applikation auf Glas mit unterschiedlichen Klebstoffen.**

| | DM-2 | | | HMV-2 | | |
|---|---|---|---|---|---|---|
| ***Ref.4*** | RT | WL | CP | RT | WL | CP |
| 0 min | 85 | 85 | 0P | 85 | 85 | 0P |
| 30 min | 85 | 85 | 0P | 85 | 85 | 0P |
| 60 min | 95 | 95 | 0P | 95 | 85 | 0P |
| 2h | 95 | 85 | 0P | 95 | 85 | 0P |
| 4h | 95 | 95 | 0P | 95 | 85 | 0P |
| 6h | 95 | 85 | 0P | 85 | 85 | 0P |
| 8h | 85 | 85 | 0P | 85 | 85 | 0P |
| | | | | | | |

| ***11*** | | | | | | |
|---|---|---|---|---|---|---|
| 0 min | 85 | 85 | 95 | 85 | 85 | 95 |
| 30 min | 95 | 85 | 95 | 85 | 85 | 95 |
| 60 min | 95 | 85 | 95 | 95 | 85 | 95 |
| 2h | 95 | 85 | 95 | 95 | 85 | 95 |
| 4h | 95 | 85 | 95 | 95 | 85 | 95 |
| 6h | 95 | 85 | 95 | 85 | 85 | 95 |
| 8h | 85 | 85 | 95 | 95 | 85 | 95 |
| 10h | 85 | 85 | 95 | 85 | 85 | 95 |

Es zeigt sich aus Tabelle 5, dass die erfindungsgemässen Beispiele bereits nach sehr kurzen Wartezeiten eine im Vergleich zum Vergleichsbeispiel stark verbesserte Haftung nach einer Kataplasma-Lagerung aufweisen.

Für Tabelle 6 wurden noch längere Wartezeiten eingehalten. Aus diesen Ergebnissen zeigt sich einerseits, dass die Haftung nach einer Kataplasma-Lagerung stark verbessert werden und anderseits, dass die erfindungsgemässen Zusammensetzungen eine bedeutend längere Topfziet aufweisen. Dies ist insbesondere bei den Russ-enthaltenden Zusammensetzungen der Fall.

In Tabelle 7 wurde nach der Applikation der Zusammensetzung auf Glas unterschiedliche Zeit gewartet, bis der Klebstoff appliziert wurde. Die vom Fachmann als Offenzeit bezeichnete Zeit, ist diejenige bei welcher keine Haftung mehr auftritt. Die für Tabelle 5 benutzen Zusammensetzungen weisen dementsprechend eine Offenzeit von mehr als 120 Tagen auf.

**Tabelle 6. Haftung nach unterschiedlichen Wartezeiten zwischen Mischung und Applikation auf Glas mit unterschiedlichen Klebstoffen. ^{†} gel.= geliert.**

| | DM-2 | | | HMV-2 | | |
|---|---|---|---|---|---|---|
| ***Ref.1*** | RT | WL | CP | RT | WL | CP |
| 4h | 40 | 50 | 10P | 100 | 100 | 0P |
| 8h | 100 | 100 | 0P | 100 | 100 | 0P |
| 24 h | 100 | 100 | 0P | 100 | 100 | 0P |
| 32 h | 40 | 50 | 0P | 100 | 100 | 0P |
| 2d | 100 | 95PB | 0P | 100 | 100 | 0P |
| 3d | gel.^{†} | gel.^{†} | gel.^{†} | gel.^{†} | gel.^{†} | gel.^{†} |
| 4d | gel.^{†} | gel.^{†} | gel.^{†} | gel.^{†} | gel.^{†} | gel.^{†} |
| 7d | gel.^{†} | gel.^{†} | gel.^{†} | gel.^{†} | gel.^{†} | gel.^{†} |

| ***11*** | | | | | | |
|---|---|---|---|---|---|---|
| 4h | 95 | 85 | 95 | 95 | 85 | 95 |
| 8h | 85 | 85 | 95 | 95 | 85 | 95 |
| 24 h | 95PB | 90PB | 20P | 95P | 70P | 75P |
| 32 h | 95PB | 90PB | 20P | 90PB | 80PB | 50P |
| 2d | 90P | 50 | 10P | 90PB | 50 | 50P |
| 3d | 90 | 80P | 10P | 100 | 90P | 40P |
| 4d | 100 | 75P | 10P | 100 | 100 | 40P |
| 7d | gel.^{†} | gel.^{†} | gel.^{†} | gel.^{†} | gel.^{†} | gel.^{†} |

| ***4*** | | | | | | |
|---|---|---|---|---|---|---|
| 4h | 40 | 50 | 40 | 100 | 100 | 100 |
| 8h | 100 | 100 | 100 | 100 | 100 | 100 |
| 24 h | 100 | 95 | 100 | 100 | 100 | 100 |
| 32 h | 100 | 100 | 100 | 100 | 100 | 100 |
| 2d | 100 | 100 | 100 | 95P | 100 | 100 |
| 3d | 100 | 100 | 100 | 100 | 100 | 100 |
| 4d | 95P | 100 | 100 | 95P | 100 | 100 |
| 7d | 100 | 100 | 100 | 100 | 100 | 100 |

**Tabelle 7. Haftung nach unterschiedlichen Wartezeiten zwischen Applikation der Zusammensetzung auf Glas und Applikation des Klebstoffs.**

| | DM-2 | | | HMV-2 | | |
|---|---|---|---|---|---|---|
| | RT | WL | CP | RT | WL | CP |
| ***Ref.4*** | 95 | 95 | 0P | 95 | 85 | 0P |
| 1 h | 95 | 85 | 0P | 95 | 85 | 0P |
| 8h | 95 | 95 | 0P | 85 | 85 | 0P |
| 24 h | 95 | 95 | 0P | 95 | 85 | 0P |
| 7d | 95 | 95 | 0P | 95 | 85 | 0P |
| 14 d | 95 | 95 | 0P | 95 | 85 | 0P |
| 30 d | 95 | 95 | 50P | 95 | 85 | 50P |
| 60 d | 95 | 95 | 50P | 95 | 85P | 95 |
| 90 d | 95 | 85P | 85P | 95 | 50P | 85P |
| 120 d | 95 | 15P | 95 | 95 | 15P | 95 |

| ***11*** | | | | | | |
|---|---|---|---|---|---|---|
| 1 h | 95 | 95 | 95 | 95 | 95 | 95 |
| 8h | 95 | 95 | 95 | 85 | 95 | 85P |
| 24 h | 95 | 95 | 95 | 95 | 95 | 85P |
| 7d | 95 | 95 | 95 | 95 | 85 | 95 |
| 14 d | 95 | 95 | 95 | 95 | 95 | 95 |
| 30 d | 95 | 85 | 95 | 95 | 85 | 95 |
| 60 d | 95 | 95 | 95 | 85 | 95 | 95 |
| 90 d | 95 | 95 | 95 | 95 | 95 | 95 |
| 120 d | 95 | 95 | 50 | 95 | 95 | 85P |

Es zeigt sich aus Tabelle 7, dass die erfindungsgemässen Beispiele bereits nach sehr kurzen Wartezeiten eine im Vergleich zum Vergleichsbeispiel stark verbesserte Haftung nach einer Kataplasma-Lagerung aufweisen.

## Patentansprüche

1. Zwei- oder mehrkomponentige wässrige Primerzusammensetzung bestehend aus
einer ersten Komponente **K1** enthaltend
- mindestens Wasser
- mindestens ein Epoxidharz **A**
einer zweiten Komponente **K2** enthaltend
- mindestens ein Polyamin **B**
und allenfalls mindestens einer weiteren Komponente;
wobei die zwei- oder mehrkomponentige wässrige Primerzusammensetzung mindestens ein Epoxysilan **ES** und/oder mindestens ein Epoxysiloxan **ESx** und/oder mindestens ein Aminosilan **AS** und/oder mindestens ein Aminosiloxan **ASx** und/oder mindestens ein Mercaptosilan **MS** enthält,
mit der Massgabe, dass im Falle der Anwesenheit von Epoxysilan **ES** und/oder Epoxysiloxan **ESx** diese oder dieses nicht in derselben Komponente wie das allenfalls vorhandene Aminosilan **AS** und/oder Aminosiloxan **ASx** vorhanden ist, und
wobei das Polyamin **B** ein Reaktionsprodukt ist, insbesondere ein Amidoamin, ein Polyamid oder ein Epoxidharz/Polyamin-Additionsprodukt

2. Zwei- oder mehrkomponentige wässrige Primerzusammensetzung gemäss Anspruch 1, **dadurch gekennzeichnet, dass** die zweite Komponente **K2** Wasser enthält.

3. Zwei- oder mehrkomponentige wässrige Primerzusammensetzung gemäss Anspruch 1 oder 2, **dadurch gekennzeichnet, dass** die Primerzusammensetzung zusätzlich Russ enthält.

4. Zwei- oder mehrkomponentige wässrige Primerzusammensetzung gemäss Anspruch 3, **dadurch gekennzeichnet, dass** die Primerzusammensetzung zwei Komponenten aufweist und dass Russ Teil der zweiten Komponente **K2** ist.

5. Zwei- oder mehrkomponentige wässrige Primerzusammensetzung gemäss einem der vorhergehenden Ansprüche, **dadurch gekennzeichnet, dass** die Primerzusammensetzung zwei Komponenten aufweist und dass das Epoxysilan **ES** und/oder Epoxysiloxan **ESx** Teil der ersten Komponente **K1** ist.

6. Zwei- oder mehrkomponentige wässrige Primerzusammensetzung gemäss einem der vorhergehenden Ansprüche, **dadurch gekennzeichnet, dass** die Primerzusammensetzung zwei Komponenten aufweist und dass das Aminosilan **AS** und/oder Aminosiloxan **ASx** und/oder Mercaptosilan **MS** Teil der zweiten Komponente **K2** ist.

7. Zwei- oder mehrkomponentige wässrige Primerzusammensetzung gemäss Anspruch 1 oder 2, **dadurch gekennzeichnet, dass** die Primerzusammensetzung drei Komponenten aufweist und dass es die dritte Komponente **K3** ist, welche Epoxysilan **ES** und/oder Epoxysiloxan **ESx** und/oder Aminosilan **AS** und/oder oder Aminosiloxan **ASx** und/oder Mercaptosilan **MS** enthält.

8. Zwei- oder mehrkomponentige wässrige Primerzusammensetzung gemäss einem der vorhergehenden Ansprüche, **dadurch gekennzeichnet, dass** das Epoxidharz **A** ein Epoxid-Festharz **A** ist.

9. Zwei- oder mehrkomponentige wässrige Primerzusammensetzung gemäss Anspruch 8, **dadurch gekennzeichnet, dass** das Epoxid-Festharz **A** ein Bisphenol-A-Diglycidylether-Festharz, insbesondere mit einem Epoxidequivalentgewicht zwischen 700 und 750 g/eq, ist.

10. Zwei- oder mehrkomponentige wässrige Primerzusammensetzung gemäss einem der Ansprüche 8 oder 9, **dadurch gekennzeichnet, dass** das Epoxid-Festharz **A** einen Durchmesser im Volumenmittel von kleiner als 1 µm, insbesondere zwischen 0.25 µm und 0.75 µm, aufweist.

11. Zwei- oder mehrkomponentige wässrige Primerzusammensetzung gemäss einem der vorhergehenden Ansprüche, **dadurch gekennzeichnet, dass** das Polyamin **B** ein Reaktionsprodukt eines Diglycidylethers von Bisphenol-A und/oder Bisphenol-F mit einem Polyoxyalkylendiamin oder Polyoxyalkylentriamin, insbesondere mit einem Polyoxyalkylendiamin, ist.

12. Zwei- oder mehrkomponentige wässrige Primerzusammensetzung gemäss einem der vorhergehenden Ansprüche, **dadurch gekennzeichnet, dass** das Epoxysilan **ES** die Formel (I) aufweist 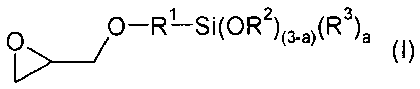 wobei R¹ für eine lineare oder verzweigte Alkylengruppe mit 1 bis 6 C-Atomen, insbesondere für Propylen, steht;
R² für H oder eine Alkylgruppe mit 1 bis 4 C-Atomen oder für eine Acylgruppe steht;
R³ für H oder für eine Alkylgruppe mit 1 bis 10 C-Atomen steht;
und a für einen Wert von 0, 1 oder 2 steht.

13. Zwei- oder mehrkomponentige wässrige Primerzusammensetzung gemäss einem der vorhergehenden Ansprüche, **dadurch gekennzeichnet, dass** das Aminosilan **AS** die Formel (II), (III) oder (IV) aufweist 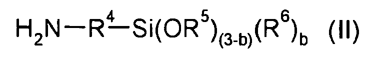 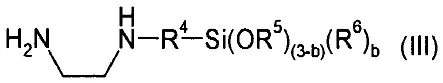 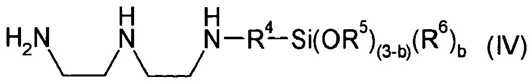 wobei R⁴ für eine lineare oder verzweigte Alkylengruppe mit 1 bis 6 C-Atomen, insbesondere für Propylen, steht;
R⁵ für H oder eine Alkylgruppe mit 1 bis 4 C-Atomen oder für eine Acylgruppe steht;
R⁶ für H oder für eine Alkylgruppe mit 1 bis 10C-Atomen steht;
und b für einen Wert von 0, 1 oder 2 steht.

14. Zwei- oder mehrkomponentige wässrige Primerzusammensetzung gemäss Anspruch 13, **dadurch gekennzeichnet, dass** das Aminosilan **AS** N-(2-Aminoethyl)-3-aminopropyl-trimethoxysilan ist.

15. Zwei- oder mehrkomponentige wässrige Primerzusammensetzung gemäss einem der vorhergehenden Ansprüche, **dadurch gekennzeichnet, dass** die erste Komponente **K1** und/oder zweite Komponente **K2** weiterhin mindestens einen Emulgator und/oder Tensid enthält.

16. Zwei- oder mehrkomponentige wässrige Primerzusammensetzung gemäss einem der vorhergehenden Ansprüche, **dadurch gekennzeichnet, dass** die zweite Komponente **K2** zusätzlich zum Polyamin **B**
mindestens einen Emulgator mit einer Polyoxyalkylendiamin-Struktur sowie
mindestens einen Coemulgator mit einer Poly(alkylen)polyamin-Struktur
enthält.

17. Zwei- oder mehrkomponentige wässrige Primerzusammensetzung gemäss einem der vorhergehenden Ansprüche, **dadurch gekennzeichnet, dass** das Epoxidharz **A** als Dispersion in Wasser in der ersten Komponente **K1** und das Polyamin **B** als Emulsion oder Dispersion in Wasser in der zweiten Komponente **K2** vorliegt.

18. Zwei- oder mehrkomponentige wässrige Primerzusammensetzung gemäss einem der vorhergehenden Ansprüche, **dadurch gekennzeichnet, dass** das Aminosiloxan **ASx** aus der Kondensation eines Aminosilans **AS** mit einem weiteren Silan entsteht unter Bildung mindestens einer Siloxan-Bindung.

19. Zwei- oder mehrkomponentige wässrige Primerzusammensetzung gemäss einem der vorhergehenden Ansprüche, **dadurch gekennzeichnet, dass**
der Anteil des Epoxysilans **ES** 0 bis 5 Gew.-%, bevorzugt 0 bis 2 Gew.-%, insbesondere 0.5 bis 2 Gew.-%,
der Anteil des Epoxysiloxans **ESx** 0 bis 5 Gew.-%, bevorzugt 0 bis 2 Gew.-%, insbesondere 0.05 bis 2 Gew.-%,
der Anteil des Aminosilans **AS** 0 bis 5 Gew.-%, bevorzugt 0 bis 2 Gew.-%, insbesondere 0.5 bis 2 Gew.-%,
der Anteil des Aminosiloxans **ASx** 0 bis 5 Gew.-%, bevorzugt 0 bis 2 Gew.-%, insbesondere 0.05 bis 2 Gew.-%, und
der Anteil des Mercaptosilans **MS** 0 bis 5 Gew.-%, bevorzugt 0 bis 2 Gew.-%, insbesondere 0.5 bis 2 Gew.-%,
jeweils bezogen auf das Gewicht der zwei- oder mehrkomponentige wässrige Primerzusammensetzung beträgt.

20. Verwendung einer zwei- oder mehrkomponentigen wässrigen Primerzusammensetzung gemäss einem der Ansprüche 1 bis 19 als Primer für Polyurethanklebstoffe und/oder Polyurethandichtstoffe.

21. Verfahren zur Verklebung oder zum Abdichten umfassend die Schritte
i) Mischen der zwei oder mehr Komponenten einer zwei- oder mehrkomponentigen wässrigen Primerzusammensetzung gemäss einem der Ansprüche 1 bis 19;
ii) Applikation der gemischten Primerzusammensetzung auf ein zu verklebendes oder abzudichtendes Substrat **S1**;
iii) Ablüften der Primerzusammensetzung;
iv) Applikation eines Klebstoffes oder Dichtstoffes auf die abgelüftete Zusammensetzung, welche sich auf dem Substrat **S1** befindet;
v) Kontaktieren des Klebstoffs oder Dichtstoffes mit einem zweiten Substrat **S2**;
oder
i') Mischen der zwei oder mehr Komponenten einer zwei- oder mehrkomponentigen wässrigen Primerzusammensetzung gemäss einem der Ansprüche 1 bis 19;
ii') Applikation der gemischten Primerzusammensetzung auf ein zu verklebendes oder abzudichtendes Substrat **S1**;
iii') Applikation eines Klebstoffes oder Dichtstoffes auf die Oberfläche eines zweiten Substrates **S2**;
iv') Kontaktieren des Klebstoffes oder Dichtstoffes mit der abgelüfteten Zusammensetzung, welche sich auf dem Substrat **S1** befindet;
oder
i") Mischen der zwei oder mehr Komponenten einer zwei- oder mehrkomponentigen wässrigen Primerzusammensetzung gemäss einem der Ansprüche 1 bis 19;
ii") Applikation der gemischten Primerzusammensetzung auf ein zu verklebendes oder abzudichtendes Substrat **S1**;
iii")Ablüften der Primerzusammensetzung;
iv")Applikation eines Klebstoffes oder Dichtstoffes zwischen die Oberflächen des Substrates **S1** und **S2**;
wobei das zweite Substrat **S2** aus demselben oder unterschiedlichem Material wie das Substrat **S1** besteht.

22. Verfahren gemäss Anspruch 21, **dadurch gekennzeichnet, dass** der Kleb- oder Dichtstoff ein Polyurethanklebstoff oder -dichtstoff ist, insbesondere ein Polyurethanklebstoff, welcher Isocyanatgruppen aufweisende Polyurethanprepolymere enthält.

23. Verfahren gemäss Anspruch 21 oder 22, **dadurch gekennzeichnet, dass** die Dicke des Klebstoffs mehr als 1 mm, insbesondere zwischen 2 und 8 mm, beträgt.

24. Verfahren gemäss einem der Ansprüche 21 bis 23, **dadurch gekennzeichnet, dass** mindestens eines der Substrates **S1** oder **S2** ein mineralisches oder ein metallisches Substrat, insbesondere Glas oder Glaskeramik, ist.

25. Artikel zu dessen Herstellung ein Verfahren gemäss einem der Ansprüche 21 bis 24 durchgeführt wird.

26. Artikel gemäss Anspruch 25, **dadurch gekennzeichnet, dass** der Artikel ein Transportmittel, insbesondere ein Automobil, Bus, Lastkraftwagen, Schienenfahrzeug, ein Schiff oder ein Luftfahrzeug ist.

## Claims

1. A two-component or multicomponent aqueous primer composition composed of
a first component **K1** comprising
- at least water
- at least one epoxy resin **A**
a second component **K2** comprising
- at least one Polyamine **B**
and if desired at least one further component; where the two-component or multicomponent aqueous primer composition comprises at least one epoxysilane **ES** and/or at least one epoxysiloxane **ESx** and/or at least one aminosilane **AS** and/or at least one aminosiloxane **ASx** and/or at least one mercaptosilane **MS,**
with the proviso that, if epoxysilane **ES** and/or epoxysiloxane **ESx** are present, they/it are/is not present in the same component as the optionally present aminosilane **AS** and/or aminosiloxane **ASx,**
and
where the polyamine **B** is a reaction product, more particularly an amidoamine, a polyamide or an epoxy resin/polyamine addition product.

2. The two-component or multicomponent aqueous primer composition of claim 1, **characterized in that** the second component **K2** comprises water.

3. The two-component or multicomponent aqueous primer composition of claim 1 or 2, **characterized in that** the primary composition in addition comprises carbon black.

4. The two-component or multicomponent aqueous primer composition of claim 3, **characterized in that** the primary composition has two components and **in that** carbon black is part of the second component **K2**.

5. The two-component or multicomponent aqueous primer composition of any of the preceding claims, **characterized in that** the primer composition has two components and **in that** the epoxysilane **ES** and/or epoxysiloxane **ESx** are/is part of the first component **K1**.

6. The two-component or multicomponent aqueous primer composition of any of the preceding claims, **characterized in that** the primer composition has two components and **in that** the aminosilane **AS** and/or aminosiloxane **ASx** and/or mercaptosilane **MS** are/is part of the second component **K2**.

7. The two-component or multicomponent aqueous primer composition of claim 1 or 2, **characterized in that** the primer composition has three components and **in that** it is the third component **K3** which comprises epoxysilane **ES** and/or epoxysiloxane **ESG** and/or aminosilane **AS** and/or aminosiloxane **ASx** and/or mercaptosilane **MS**.

8. The two-component or multicomponent aqueous primer composition, **characterized in that** the epoxy resin **A** is a solid epoxy resin **A**.

9. The two-component or multicomponent aqueous primer composition of claim 8, **characterized in that** the solid epoxy resin **A** is a solid bisphenol A diglycidyl ether resin, more particularly having an epoxide equivalent weight of between 700 and 750 g/eq.

10. The two-component or multicomponent aqueous primer composition of either of claims 8 and 9, **characterized in that** the solid epoxy resin **A** has a volume-average diameter of less than 1 µm, more particularly of between 0.25 µm and 0.75 µm.

11. The two-component or multicomponent aqueous primer composition of any of the preceding claims, **characterized in that** the polyamine **B** is a reaction product of a diglycidyl ether of bisphenol A and/or bisphenol F with a polyoxyalkylenediamine or polyoxyalkylenetriamine, more particularly with a polyoxyalkylenediamine.

12. The two-component or multicomponent aqueous primer composition of any of the preceding claims, **characterized in that** the epoxysilane **ES** has the formula (I) 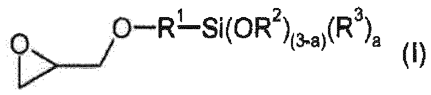 where R¹ is a linear or branched alkylene group having 1 to 6 C atoms, more particularly propylene;
R² is H or an alkyl group having 1 to 4 C atoms, or an acyl group;
R³ is H or an alkyl group having 1 to 10 C atoms; and a has a value of 0, 1 or 2.

13. The two-component or multicomponent aqueous primer composition of any of the preceding claims, **characterized in that** the aminosilane **AS** has the formula (II), (III) or (IV) 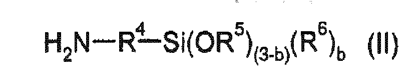 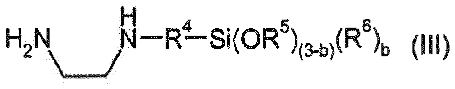 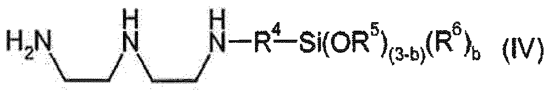 where R⁴ is a linear or branched alkylene group having 1 to 6 C atoms, more particularly propylene;
R⁵ is H or an alkyl group having 1 to 4 C atoms, or an acyl group;
R⁶ is H or an alkyl group having 1 to 10 C atoms; and b has a value of 0, 1 or 2.

14. The two-component or multicomponent aqueous primer composition of claim 13, **characterized in that** the aminosilane **AS** is N-(2-aminoethyl)-3-aminopropyltrimethoxysilane.

15. The two-component or multicomponent aqueous primer composition of any of the preceding claims, **characterized in that** the first component **K1** and/or second component **K2** further comprise/s at least one emulsifier and/or surfactant.

16. The two-component or multicomponent aqueous primer composition of any of the preceding claims, **characterized in that** the second component **K2** further to the polyamine **B** comprises
at least one emulsifier having a polyoxyalkylenediamine structure and also
at least one coemulsifier having a poly(alkylene)polyamine structure.

17. The two-component or multicomponent aqueous primer composition of any of the preceding claims, **characterized in that** the epoxy resin **A** is present as a dispersion in water in the first component **K1** and the polyamine **B** is present as an emulsion or dispersion in water in the second component **K2**.

18. The two-component or multicomponent aqueous primer composition of any of the preceding claims, **characterized in that** the aminosiloxane **ASx** comes about from the condensation of an aminosilane **AS** with a further silane, with formation of at least one siloxane bond.

19. The two-component or multicomponent aqueous primer composition of any of the preceding claims, **characterized in that**
the fraction of the epoxysilane **ES** is 0% to 5%, preferably 0% to 2%, more particularly 0.5% to 2% by weight,
the fraction of the epoxysiloxane **ESx** is 0% to 5%, preferably 0% to 2%, more particularly 0.05% to 2% by weight,
the fraction of the aminosilane **AS** is 0% to 5%, preferably 0% to 2%, more particularly 0.5% to 2% by weight,
the fraction of the aminosiloxane **ASx** is 0% to 5%, preferably 0% to 2%, more particularly 0.05% to 2% by weight, and
the fraction of the mercaptosilane **MS** is 0% to 5%, preferably 0% to 2%, more particularly 0.5% to 2% by weight,
based in each case on the weight of the two-component or multicomponent aqueous primer composition.

20. The use of a two-component or multicomponent aqueous primer composition of any of claims 1 to 19 as a primer for polyurethane adhesives and/or polyurethane sealants.

21. A method of adhesive bonding or of sealing, comprising the steps of
i) mixing the two or more components of a two-component or multicomponent aqueous primer composition of any of claims 1 to 19;
ii) applying the mixed primer composition to a substrate **S1** to be bonded or sealed;
iii) flashing off the primer composition;
iv) applying an adhesive or sealant to the flashed-off composition which is on the substrate **S1**;
v) contacting the adhesive or sealant with a second substrate **S2**;
or
i') mixing the two or more components of a two-component or multicomponent aqueous primer composition of any of claims 1 to 19;
ii') applying the mixed primer composition to a substrate **S1** to be bonded or sealed;
iii') applying an adhesive or sealant to the surface of a second substrate **S2**;
iv') contacting the adhesive or sealant with the flashed-off composition which is on the substrate **S1**;
or
i") mixing the two or more components of a two-component or multicomponent aqueous primer composition of any of claims 1 to 19;
ii)") applying the mixed primer composition to a substrate **S1** to be bonded or sealed;
iii")flashing off the primer composition;
iv") applying an adhesive or sealant between the surfaces of the substrates **S1** and **S2**;
the second substrate **S2** being composed of the same or different material as the substrate **S1.**

22. The method of claim 21, **characterized in that** the adhesive or sealant is a polyurethane adhesive or sealant, more particularly a polyurethane adhesive, which comprises polyurethane prepolymers containing isocyanate groups.

23. The method of claim 21 or 22, **characterized in that** the thickness of the adhesive is more than 1 mm, more particularly between 2 and 8 mm.

24. The method of any of claims 21 to 23, **characterized in that** at least one of the substrates **S1** or **S2**, is a mineral substrate or a metallic substrate, more particularly glass or glass ceramic.

25. An article in whose production a method of any of claims 21 to 24 is carried out.

26. The article of claim 25, **characterized in that** the article is a means of transport, more particularly an automobile, bus, truck, rail vehicle, boat or aircraft.

## Revendications

1. Composition d'apprêt aqueuse à deux ou plusieurs composants comportant
Un premier composant **K1** contenant
- au moins de l'eau
- au moins une résine époxyde **A**
un deuxième composant **K2** contenant
- au moins une polyamine **B**
et éventuellement au moins un autre composant ;
la composition d'apprêt aqueuse à deux ou plusieurs composants contenant au moins un époxysilane **ES** et/ou au moins un époxysiloxane **ESx** et/ou au moins un aminosilane **AS** et/ou au moins un aminosiloxane **ASx** et/ou au moins un mercaptosilane **MS,**
sous la condition que dans le cas de présence d'époxysilane **ES** et/ou d'époxysiloxane **ESx** celui-ci n'est pas présent dans le même composant que l'aminosilane **AS** et/ou l'aminosiloxane **ASx** éventuellement présents et,
la polyamine **B** étant un produit réactif, en particulier une amidoamine, un polyamide ou un additif résine époxyde/polyamine.

2. Composition d'apprêt aqueuse à deux ou plusieurs composants selon revendication 1 **caractérisée par le fait que** le deuxième composant **K2** contient de l'eau.

3. Composition d'apprêt aqueuse à deux ou plusieurs composants selon revendication 1 ou 2, **caractérisée par le fait que** la composition d'apprêt contient en plus de la suie.

4. Composition d'apprêt aqueuse à deux ou plusieurs composants selon revendication 3 **caractérisée par le fait que** la composition d'apprêt présente deux composants et que la suie est une partie du deuxième composant **K2.**

5. Composition d'apprêt aqueuse à deux ou plusieurs composants selon l'une des revendications précédentes **caractérisée par le fait que** la composition d'apprêt présente deux composants et que l'époxysilane **ES** et/ou l'époxysiloxane **ESx** est une partie du premier composant **K1**.

6. Composition d'apprêt aqueuse à deux ou plusieurs composants selon l'une des revendications précédentes **caractérisée par le fait que** la composition d'apprêt présente deux composants et que l'aminosilane **AS** et/ou l'aminosiloxane **ASx** et/ou le mercaptosilane **MS** est une partie du deuxième composant **K2**.

7. Composition d'apprêt aqueuse à deux ou plusieurs composants selon revendication 1 ou 2 **caractérisée par le fait que** la composition d'apprêt présente 3 composants et que c'est le troisième composant **K3** qui contient l'époxysilane **ES** et/ou l'époxysiloxane **ESx**, et/ou l'aminosilane **AS** et/ou l'aminosiloxane **ASx** et/ou le mercaptosilane **MS**.

8. Composition d'apprêt aqueuse à deux ou plusieurs composants selon l'une des revendications précédentes **caractérisée par le fait que** la résine époxyde **A** est une résine époxyde solide **A.**

9. Composition d'apprêt aqueuse à deux ou plusieurs composants selon revendication 8 **caractérisée par le fait que** la résine époxyde solide **A** est une résine solide de diglycidyl-ether de bisphénol A, en particulier avec un poids d'équivalent époxyde situé entre 700 et 750 g/eq.

10. Composition d'apprêt aqueuse à deux ou plusieurs composants selon l'une des revendications 8 ou 9 **caractérisée par le fait que** la résine époxyde solide **A** présente un diamètre moyen volumique inférieur à 1 µm, se situant en particulier entre 0,25 µm et 0,75 µm.

11. Composition d'apprêt aqueuse à deux ou plusieurs composants selon l'une des revendications précédentes **caractérisée par le fait que** la polyamine **B** est un produit réactif d'un diglycidyl-ether de bisphénol A et/ou bisphénol F avec un polyoxyalkylène-diamine ou polyoxyalkylène-triamine, en particulier avec un polyoxyalkylène-diamine.

12. Composition d'apprêt aqueuse à deux ou plusieurs composants selon l'une des revendications précédentes **caractérisée par le fait que** l'époxysilane **ES** présente la formule (I) 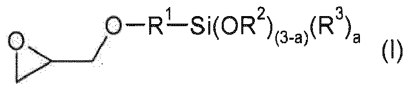 où R¹ représente un groupe alkyle linéaire ou ramifié comportant de 1 à 6 atomes de carbone, en particulier le propylène ;
R² représente H ou un groupe alkyle comportant de 1 à 4 atomes de carbone ou pour un groupement acyle ;
R³ représente H ou un groupe alkyle comportant de 1 à 10 atomes de carbone ;
et a représente une valeur de 0, 1 ou 2.

13. Composition d'apprêt aqueuse à deux ou plusieurs composants selon l'une des revendications précédentes **caractérisée par le fait que** l'époxysilane ES présente la formule (II), (III) ou (IV) 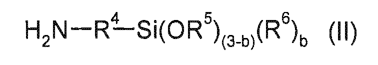 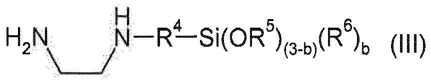 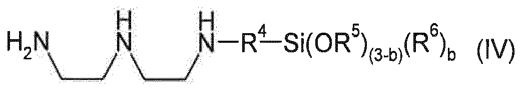 où R4 représente un groupe alkyle linéaire ou ramifié comportant de 1 à 6 atomes de carbone, en particulier le propylène ;
R5 représente H ou un groupe alkyle comportant de 1 à 4 atomes de carbone ou pour un groupe acyle ;
R6 représente H ou un groupe alkyle comportant de 1 à 10 atomes de carbone ;
et b représente une valeur de 0, 1 ou 2.

14. Composition d'apprêt aqueuse à deux ou plusieurs composants selon revendication 13 **caractérisée par le fait que** l'aminosilane AS est du N-(2-aminoéthyl)-3-aminopropyl-triméthoxysilane.

15. Composition d'apprêt aqueuse à deux ou plusieurs composants selon l'une des revendications précédentes **caractérisée par le fait que** le premier composant **K1** et/ou le deuxième composant **K2** contient en outre au moins un émulsif et/ou un agent tensioactif.

16. Composition d'apprêt aqueuse à deux ou plusieurs composants selon l'une des revendications précédentes **caractérisée par le fait que** le deuxième composant **K2** contient en plus du polyamine **B au** moins un émulsif de structure polyoxyalkylène-diamine
ainsi
qu'au moins un co-émulsif de structure poly(alkylène)polyamine.

17. Composition d'apprêt aqueuse à deux ou plusieurs composants selon l'une des revendications précédentes **caractérisée par le fait que** la résine époxyde **A** est présente sous forme de dispersion dans l'eau dans le premier composant **K1** et la polyamine **B sous** forme d'émulsion ou de dispersion dans le deuxième composant **K2.**

18. Composition d'apprêt aqueuse à deux ou plusieurs composants selon l'une des revendications précédentes **caractérisée par le fait que** l'aminosiloxane **ASx** résulte de la condensation d'un aminosilane **AS** avec un autre silane avec formation d'au moins une liaison siloxane.

19. Composition d'apprêt aqueuse à deux ou plusieurs composants selon l'une des revendications précédentes **caractérisée par le fait que**
la partie d'époxysilane **ES** représente de 0 à 5 %m, de préférence de 0 à 2 %m, en particulier de 0,5 à 2 %m,
la partie d'époxysiloxane **ESx** représente de 0 à 5 %m, de préférence de 0 à 2 %m, en particulier de 0,05 à 2 %m,
la partie d'aminosilane **AS** représente de 0 à 5 %m, de préférence de 0 à 2 %m, en particulier de 0,5 à 2 %m,
la partie d'aminosiloxane **ASx** représente de 0 à 5 %m, de préférence de 0 à 2 %m, en particulier de 0,05 à 2 %m et
la partie de mercaptosilane **MS** représente de 0 à 5 %m, de préférence de 0 à 2 %m, en particulier de 0,5 à 2 %m,
rapportées chaque fois au poids de la composition d'apprêt aqueuse à deux ou plusieurs composants.

20. Utilisation d'une composition d'apprêt aqueuse à deux ou plusieurs composants selon l'une des revendications 1 à 19 en tant qu'apprêt pour colles ou masses d'étanchéité polyuréthanes.

21. Les processus de collage ou d'étanchéisation comportent les étapes
i) mélange des deux ou plusieurs composants d'une composition d'apprêt aqueuse à deux ou plusieurs composants selon l'une des revendications 1 à 19 ;
ii) application de la composition d'apprêt mélangée sur un substrat **S1** à coller ou à étanchéifier ;
iii) évaporation de la composition d'apprêt ;
iv) application d'une colle ou d'une masse d'étanchéité sur la composition évaporée qui se trouve sur le substrat **S1** ;
v) mise en contact de la colle ou de la masse d'étanchéité avec un deuxième substrat **S2** ;
ou
i') mélange des deux ou plusieurs composants d'une composition d'apprêt aqueuse à deux ou plusieurs composants selon l'une des revendications 1 à 19 ;
ii') application de la composition d'apprêt mélangée sur un substrat **S1** à coller ou à étanchéifier ;
iii') application d'une colle ou d'une masse d'étanchéité à la surface d'un deuxième substrat **S2** ;
iv') mise en contact de la colle ou de la masse d'étanchéité avec la composition évaporée qui se trouve sur le substrat **S1** ;
ou
i") mélange des deux ou plusieurs composants d'une composition d'apprêt aqueuse à deux ou plusieurs composants selon l'une des revendications 1 à 19 ;
ii") application de la composition d'apprêt mélangée sur un substrat **S1** à coller ou à étanchéifier ;
iii") évaporation de la composition d'apprêt ;
iv")application d'une colle ou d'une masse d'étanchéité entre les surfaces des substrats **S1** et **S2** ;
le deuxième substrat **S2** étant constitué du même matériau ou d'un matériau différent de celui du substrat **S1**.

22. Processus selon revendication 21 **caractérisé par le fait que** la colle ou la masse d'étanchéité est une colle ou une masse d'étanchéité polyuréthane, en particulier une colle polyuréthane contenant des prépolymères polyuréthanes comportant des groupes isocyanates.

23. Processus selon revendication 21 ou 22 **caractérisé par le fait que** l'épaisseur de la colle est supérieure à 1 mm, se situant en particulier entre 2 et 8 mm.

24. Processus selon l'une des revendications 21 à 23 **caractérisé par le fait que** l'un au moins des substrats **S1** ou **S2** est un substrat minéral ou métallique, en particulier du verre ou de la vitrocéramique.

25. Article dont la fabrication comporte l'exécution d'un processus selon l'une des revendications 21 à 24.

26. Article selon revendication 25, **caractérisé par le fait que** l'article est un moyen de transport, en particulier une automobile, un bus, un camion, un véhicule ferroviaire, un navire ou un aéronef.
